# EUROPÄISCHE PATENTANMELDUNG

(11) **EP 0 610 667 A1**
(43) Veröffentlichungstag der Anmeldung: **17.08.1994**
(21) Anmeldenummer: 94100320.4
(22) Anmeldetag: 12.01.1994
(51) Int. Cl.: G01N 21/78, G01N 31/22

(54) **Träger für den kolorimetrischen Gasnachweis in Folienverbundbauweise**

(30) Priorität: 10.02.1993 DE 4303860
(71) Anmelder: DRÄGERWERK AKTIENGESELLSCHAFT, D-23558 Lübeck (DE)
(72) Erfinder: Rieger, Jutta, D-23560 Lübeck (DE); Breithaupt, Wolfgang, D-23823 Seedorf (DE); Marcoll, Joachim, Dr., D-23552 Lübeck (DE)

(57) **Zusammenfassung**

Ein Träger für ein oder mehrere kanalförmig in diesem Träger eingearbeitete Reaktionszonen, welche jede mit einem Farbindikator ausgekleidet ist, soll derart verbessert werden, daß eine einfach durchzuführende, individuell veränderbare Belegung der Reaktionszonen mit den erforderlichen, unter Umständen unterschiedlichen Indikatoren bei gleichmäßiger Belegungsdichte verwirklicht werden kann. Dies erfolgt durch einen Träger, welcher als ein sandwichartiger Folienverbund ausgestaltet ist, zu welchem eine Reagenzträgerfolie (12) gehört, welche aus einem besonderen Kunststoffmaterial besteht, nämlich aus einem Perfluorethylenpropylen (FEP), das durch eine Coronaentladung oberflächenbehandelt ist (FEPc). Eine besonders günstige Ausbildungsform für die Reaktionszonen auf der Reagenzträgerfolie (12) besteht darin, daß die Reaktionsteilnehmer in Form einer durch einen Tropfengenerator (20) aufgebrachten Punktmatrix (13) auf die Reagenzträgerfolie (12) aufgebracht sind.

## Beschreibung

Die Erfindung betrifft einen Träger für eine oder mehrere kanalförmig an diesem aufgebrachte Reaktionszonen zum kolorimetrischen Nachweis von gasförmigen Schadstoffen, die beim Durchdringen des Kanals eine Farbreaktion mit einem Farbindikator eingehen, der auf einer der Grundflächen der Reaktionszone als Auskleidung aufgebracht ist, wobei ein einzelner Kanal oder mehrere Kanäle auf dem Träger aufgebracht sind.

Ein derartiger Träger ist aus der DE-PS 39 02 402 bekanntgeworden.

In dem bekannten Träger sind kanalförmige Vertiefungen eingearbeitet, die jeweils einen Farbindikator und zusätzliche Reaktionsteilnehmer für die kolorimetrische Nachweisreaktion enthalten. Dabei können die Reaktionsteilnehmer in jedem der Kanäle identisch oder auch unterschiedlich sein, je nachdem, ob ein mehrfacher Nachweis derselben Gaskomponenten oder von unterschiedlichen Gaskomponenten in Luft durchgeführt werden soll. Jeder der Kanäle besitzt mindestens eine Zutrittsöffnung für den nachzuweisenden Schadstoff, der entweder durch den Kanal hindurchgesaugt wird (durchströmbares Prüfröhrchen) oder in den Kanal hineindiffundiert (Diffusionsröhrchen). Jeder einzelne Kanal wirkt somit wie ein herkömmliches Einzelprüfröhrchen für den kolorimetrischen Nachweis von gasförmigen Komponenten in Luft. Durch die Anordnung mehrerer parallel angeordneten Kanäle auf dem Träger erhält man in miniaturisierter Form ein Mehrfachmeßgerät für den kolorimetrischen Nachweis von gasförmigen Schadstoffen. Der chipförmige Träger wird über ein optoelektronisches Abtastgerät ausgewertet. Dazu wird automatisch eine Sender- und Detektoreinheit auf gleicher Höhe und in identischer Erstreckung zu jedem der Einzelkanäle geführt und das von der verfärbten Kanalzone reflektierte Licht ausgewertet. Die Länge der Verfärbungszone gibt Auskunft über die in der Nachweisprobe enthaltenen Konzentrationen oder über die Menge der untersuchten Gaskomponente, je nachdem ob die Kanäle als Prüfröhrchen in Durchströmung oder als Dosimeter mittels Diffusion des Schadstoffes ausgelegt sind.

Bei dem bekannten Träger sind die Reaktionszonen als Kanäle in das Grundmaterial des Träger-Werkstoffes in Form von Ausnehmungen mit geringer Tiefe hergestellt. Die nachträgliche Beschichtung bzw. Belegung der Kanalvertiefungen ist nur unter erschwerten Fertigungsbedingungen möglich und ergibt ein unbefriedigendes Ergebnis im Hinblick auf eine möglichst gleichmäßige Verteilung der Reaktionspartner, insbesondere des Farbindikators längs der gesamten Streckenführung der Kanalvertiefungen. Dies ist besonders dadurch begründet, daß das Einbringen der Reaktionspartner in der Regel aus einer flüssigen Emulsion geschieht, so daß in den Kanalvertiefungen, durch Oberflächenspannungen der Flüssigkeit und durch ungleichmäßige Verteilung der festen Bestandteile in der Suspension bedingt, unregelmäßig dichte Verteilungen der Reaktionspartner innerhalb der Kanalführung auftreten. Diese Problematik wird noch verschärft, wenn in den verschiedenen Kanälen unterschiedliche Reagenzträger zum Nachweis von verschiedenartigen Gaskomponenten eingesetzt werden, so daß auch unterschiedliche Suspensionen mit verschiedenen Oberflächenspannungen und unterschiedlichen, in den Suspensionen verteilten festen Reaktionsträgern verwendet werden. Eine ungleichmäßige Verteilung der Reaktionspartner längs der Kanalführung ergibt eine schwankende Verfärbungsanzeige, die eben nicht durch den nachzuweisenden Schadstoff verursacht ist, und die somit zu einer Verfälschung des Meßergebnisses führt.

Der vorliegenden Erfindung liegt daher die Aufgabe zugrunde, einen Träger der genannten Art so zu verbessern, daß eine einfach durchzuführende, individuell veränderbare Belegung der Reaktionszonen mit den erforderlichen, unter Umständen unterschiedlichen Indikatoren bei gleichmäßiger Belegungsdichte verwirklicht werden kann. Dabei soll auf die Möglichkeit einer vollständigen Umsetzung des nachzuweisenden Schadstoffes an den Farbindikatoren besonderer Wert gelegt werden.

Die Lösung der Aufgabe erfolgt dadurch, daß der Träger als ein sandwichartiger Folienverbund ausgebildet ist, der eine Reagenzträgerfolie umfaßt, auf welcher jede Reaktionszone mit ihren Reagenzien flächig und den Kanalverlauf vorgebend aufgetragen ist, und die mit einer Kanalfolie abgedeckt ist, welche dem Reaktionszonenverlauf folgend jede der Zonen mit einem Strömungskanal überdeckt, der einerseits durch Seitenwände jede Reaktionszone von ihrer benachbarten bzw. von der Umgebung räumlich und strömungsmäßig abtrennt, und der andererseits mindestens einen Kanalanschluß aufweist, durch den der nachzuweisende Schadstoff Zutritt zu der Reaktionszone erhält, und daß die Reagenzträgerfolie aus FEP (Perfluorethylenpropylen) besteht, die durch eine Coronaentladung oberflächenbehandelt ist (FEPc).

Durch die Aufteilung der zur Bildung des Nachweiskanals erforderlichen Elemente in für die Präparation der Auskleidung der kanalförmigen Reaktionszonen geeignete Baugruppen, nämlich in im wesentlichen flächigen Folien, die im zusammengebauten Zustand als Folienverbund vorliegen, kann eine für jeden einzelnen Arbeitsschritt optimierte Fertigungstechnologie benutzt werden. So kann die Reaktionszone auf dem folienartigen Reagenzträger durch bekannte Techniken zur Aufbringung von Flüssigkeiten auf Oberflächen gebildet werden; dazu wird z.B. eine den Verlauf der Reaktionszonen vorgebende Maske über die Reagenzträgerfolie gelegt und die freibleibenden Ausschnitte der Maske werden mit der für den entsprechenden Nachweis notwendigen Flüssigkeit ausgefüllt, welche nach Verdunstung oder Abtrocknung der Lösungsmittel die Reaktionspartner, insbesondere den Farbindikator, in fester Form zurückläßt. Nach Entfernung der Maske bleiben die Reaktionszonen als Spur auf der Reagenzträgerfolie zurück. Probleme mit unterschiedlichen Oberflächenspannungen oder ungenügend gleichmäßiger Verteilung der Reaktionspartner entlang der Reaktionszonen werden eliminiert, da die FEPc-Folie besonders gute Hafteigenschaften besitzt, gerade im Hinblick auf die Anhaftung von polaren Reagenzien. Erst nach erfolgter Abtrocknung der Reaktionszone wird die Kanalfolie deckungsgleich mit dem Verlauf der Reaktionszonen aufgebracht, welche ihrerseits erst die Kanalwände neben jeder einzelnen Reaktionszone errichtet. Auch hierbei ist es von Vorteil, daß die Kanalstruktur in eine Folie eingearbeitet ist, da sie in einfacher Form als Folienausschnitt ausgebildet sein kann, die ihrerseits nicht mit dem Indikator ausgekleidet sein muß, und wobei die zwischen den Ausschnitten Stehenbleibenden Stege einfach mit der darunterliegenden Reagenzträgerfolie zu einer Einheit verschweißt werden können, so daß die jeweiligen benachbarten Kanäle dicht voneinander abgeschlossen sind. Über die Kanalausschnitte wird eine Deckfolie gelegt, die die Kanalwände abschließt. Anfang und/oder Ende der so gebildeten geschlossenen Kanäle sind mit einer Kanalöffnung versehen, über welche der nachzuweisende Schadstoff Zutritt zu den Reaktionszonen erhält. Die Kanalöffnungen können ihrerseits durch Folienmembranen abgedichtet sein, die dann gleichzeitig Bestandteil der zusätzlichen, über die Kanalfolie gezogenen Deckfolie sind. Diese Versiegelung wird beim Gebrauch des Trägers als Prüfröhrchen durchstoßen, was entweder mechanisch geschieht oder auch gleich beim Ansetzen einer Saugpumpe zur Durchströmung des Kanals, wie es z.B. aus dem Stand der Technik nach der DE-PS 39 02 402 bekannt ist.

Die besonders guten Hafteigenschaften der FEPc-Folie äußern sich darin, daß der einmal aufgebrachte Farbindikator und die zusätzlichen, für eine Farbreaktion notwendigen Reagenzien eine gute Haftbeständigkeit auch bei Falten oder Knicken der Folie zeigen.

Weiterhin ist es möglich, auf der FEPc-Folie die Reagenzien mit einer Vielzahl von Auftragungsverfahren aufzubringen; hierzu gehören neben dem Aufdrucken (Siebdruck) das Aufstreichen mittels Pinseln oder der Stempeldruck, Spincoating, Vernebeln oder Aufspritzen. Folien aus Perfluorethylenpropylen werden von verschiedenen Herstellern angeboten; die Firma E. du Pont bietet diese unter der Bezeichnung "TEFLON FEP Fluorcarbonfilm Typ C" an. Obwohl Glas und herkömmliches "Teflon" an sich als Material für die Reagenzträgerfolie geeignet sind, werden die oben genannten Eigenschaften erst durch die spezielle, mit einer Corona-Entladung behandelten FEP-Folien erzielt (die Art der Coronaentladung ist in der US - 3,676,181 beschrieben). Die Hafteigenschaften und die Langlebigkeit der Beschichtung kommt erst bei dieser speziellen Folie zum Tragen. Insbesondere das Auftragen von polaren Substanzen aus z.B. einer Emulsion oder durch Aufspritzen bzw. Aufsprühen hat sich überraschenderweise bei den genannten FEPc-Folien als besonders leicht und ohne Benetzungsschwierigkeiten ablaufend erwiesen. Dies ist insofern als ein unerwartetes Ergebnis anzusehen, als FEP eine PTFE-Verbindung (Handelsname TEFLON) ist, der von Grund aus nicht-benetzende Eigenschaften zugesprochen werden.

Folien aus FEPc zeichnen sich darüber hinaus durch gute Schweißeigenschaften aus, wodurch ein sicheres und direktes Verschweißen der zu bildenden Strömungskanäle im Folienverbund möglich wird.

Der Verlauf der Reaktionszonen kann auf einfache Weise dadurch festgelegt werden, daß auf die Reagenzträgerfolie eine Haftschicht aus einem Vorkondensat aufgetragen wird, das nach dem Sol-Gel-Verfahren (EP-A-94 060) gewonnen wird. Auf dieses flächig ausgebreitete Vorkondensat werden beispielsweise mit dem Farbindikator imprägnierte Silicagelkugeln aufgetragen. Das Vorkondensat kann auch an definierten Stellen punktförmig, eine Punktmatrix bildend, auf der Trägerfolie aufgedruckt sein, so daß anschließend nur an diesen Haftpunkten das imprägnierte Silicagel aufgebracht ist.

Eine Möglichkeit zur Aufbringung der für die Farbreaktion erforderlichen Reagenzien in einer vorher nicht möglichen Variationsvielfalt ergibt sich dadurch, daß die Reaktionszone in Form einer Punktmatrix gebildet ist. Diese Matrixstruktur erhält man dadurch, daß einzelne Tropfen einer Lösung oder Emulsion aus einem Vorratsgefäß mittels eines Tropfengenerators längs der Reaktionszone gezielt aufgebracht werden. Der Tropfengenerator arbeitet nach dem Prinzip einer Piezokeramikdüse, mit dessen Hilfe es möglich ist, Flüssigkeiten tropfenweise im Bereich von Nanolitern zu dosieren (sog. Tintenstrahldruckverfahren, bekannt von den kommerziell erhältlichen Tintenstrahldruckern). Ein derartiges Gerät wird von der Firma Microdrop GmbH, Deutschland, vertrieben und ist in der Zeitschrift: Feinwerktechnik und Meßtechnik 99 (1991) 11, Seite 459 bis 463 beschrieben. Die auf die Reaktionszone aufgebrachten Tropfen verbreiten sich auf der Reagenzträgerfolie zu punktförmigen Flecken; dabei erweist es sich wiederum als vorteilhaft, daß als Reagenzträgerfolie das Material FEPc gewählt wird, da die guten Hafteigenschaften gerade von polaren Flüssigkeiten zu einer fast kreisrunden Flächenausbildung des Tropfens führen, so daß ein glatter, geschlossener Punktrand erhalten wird. Diese Eigenschaft kommt einer durch die Tropfengröße definierbare und reproduzierbare Flächenbelegung in der Reaktionszone zugute. Hiermit einher geht die genau dosierbare Flüssigkeitsmenge, die eine gleichbleibende Flächenverteilung der Reagenzien entlang der Reaktionszone ermöglicht, wodurch eine genaue Farbanzeige bei geringstmöglicher Verwendung von Reagenzien gegeben ist.

Weiterhin kann durch Variation der Flächenverteilung der einzelnen Punkte auf der Reaktionszone die Nachweisempfindlichkeit verändert werden: z.B. kann bei einem Diffusionskanal durch Verdünnung der Reagenzien, d.h. durch geringer werdende Flächenbelegung mit Reagenztropfen, im Verlaufe der Diffusionsstrecke eine Linearisierung der Verfärbungsanzeige erzielt werden. Wenn erforderlich, können auch andere als lineare Zusammenhänge zwischen der Länge der Verfärbungszone und der Menge/Konzentration des nachzuweisenden Schadstoffes durch entsprechende Veränderung der Belegung mit Reagenztropfen verwirklicht werden. Eine solche Veränderung der Nachweisempfindlichkeit durch Erzeugung eines Gradienten in der Punktdichte auf der Reaktionszone ermöglicht eine Vielfalt an Veränderungen in die Nachweisempfindlichkeit auch bei durchströmten Kanälen (Prüfröhrchen). In manchen Fallen ist es erwünscht, die Punkte auf der Fläche der Reaktionszone so zu verteilen, daß Bereiche mit Punkten gefolgt sind von Bereichen ohne Punkte, so daß ein Fortschreiten der Verfärbung innerhalb des Punktbereiches langsam, von Punktbereich zu Punktbereich jedoch schnell erfolgt.

Die Auftragung der Reagenzien auf die Reaktionszone läßt sich in einer sogenannten "Eintopfpräparation" durchführen: dabei befinden sich außer den Komponenten für eine Silicagelerzeugung als Trägersubstanz auch die für die Farbreaktion erforderlichen Reagenzien (Indikator) in einem gemeinsamen Behälter (Topf), aus dem die für die Auftragung auf der Reagenzzone erforderliche Menge entnommen wird. Bei Verwendung eines Tropfengenerators kann dieser Behälter unmittelbar als Vorratsbehälter dienen, aus dem die für die Tropfenerzeugung erforderliche Menge direkt entnommen wird. Als ein geeignetes Präparationsverfahren hat sich das sog. Sol-Gel-Verfahren erwiesen, wie es z.B. in der EP-A-94 060 beschrieben ist. Danach wird zunächst ein Vorkondensat hergestellt, dem anschließend die Nachweis-spezifischen Komponenten zugefügt werden. Für den Nachweis von NH₃, NO₂ und H₂S soll beispielhaft die Zusammensetzung und die Herstellung einer derartigen Lösung zur anschließenden Beschichtung der Reaktionszonen angegeben werden:

### Vorkondensat:

20 mL Tetramethoxysilan
20 mL Ethanol
in ein Glasgefäß geben und in Eiswasser mit Magnetrührer rühren,
10 mL 0,01 m HCl
hinzufügen und ca. 5 min lang rühren. Das Vorkondensat wird erst 24 h später weiterverarbeitet.

Das angegebene Vorkondensat kann ebensogut auch mit Tetraethoxysilan statt mit Tetramethoxysilan angesetzt werden. Es ist dann über einen längeren Zeitruam verarbeitbar, d.h. die sogenannte Topfzeit kann verlängert werden. Die Menge der zugegebenen Säure ist als weiterer Parameter für die Länge der Verarbeitungszeit variierbar. Ethanol dient als Verdünnungskomponente.

Das hier angegebene Vorkondensat ist auch geeignet, als Haftvermittler zwischen der Reagenzträgerfolie und den mit dem Indikator imprägnierten Reagenzträger zu dienen.

### NH₃-Beschichtunglösung:

Bromphenolblau-Lösung (BPB-Lsg.):
2 g Bromphenolblau
90 mL Ethanol
mit Magnetrührer mischen
45 mL BPB-Lsg.
15 mL Vorkondensat

### NO₂-Beschichtungslösung:

o-Tolidin-Lösung:
0.425 g o-Tolidin
93 mL Ethanol
7 mL Ethylenglykol
mit Magnetrührer mischen
42.5 mL o-Tolidin-Lsg.
10 mL Vorkondensat

### H₂S-Beschichtungslösung:

Pb-Acetat-Lösung:
5 g Pb-Acetat
1.5 mL Ethylenglycol
im 50 mL Meßkolben mit etwas Methanol versetzen und durch Ultraschall mischen. Mit Methanol auffüllen.
32 mL Ethanol
2.8 mL Pb-Acetat-Lsg.
5 mL Vorkondensat
mit Magnetrührer mischen.

Die angegebenen Beispiele können alle in der sogenannten "Eintopfpräparation" angesetzt werden, d.h. alle notwendigen Komponenten können gemeinsam in einem Topf präpariert werden. Je nach Komponentenvielfalt und Konzentration bei anderen Beschichtungslösungen und Vorkondensat müssen die Bestandteile getrennt verarbeitet und gegebenenfalls auch getrennt auf die Reagenzträgerfolie aufgetragen werden.

Führt man die Beschichtung mittels eines Tropfengenerators durch, können auf einer einzigen Reaktionszone in besonders einfacher Weise mehrere unterschiedliche Punktmatrizen aufgebracht werden. So kann eine erste Punktmatrix Reagenzien für den Nachweis von NH₃ (Ammoniak), und eine zweite Punktmatrix Reagenzien für den Nachweis von H₂S enthalten. Man erhält somit ein doppelt anzeigendes kolorimetrisches Nachweisgerät, oder man kann die zweite Schadstoffanzeige zur Eliminierung von Querempindlichkeiten heranziehen. Die Anordnung der verschiedenen Teilbereiche für die dort vorgesehenen Punktmatrizen können entweder hintereinander liegend oder parallel zueinander in Strömungs- bzw. Diffusionsrichtung verlaufend vorgesehen sein. Eine weitere Möglichkeit zur Anordnung besteht darin, eine erste Punktmatrix aufzutragen, welche einen genügend weiten Zwischenraum zwischen den einzelnen Punkten vorsieht, so daß die Punkte der zweiten Matrix gezielt in diese Zwischenräume gesetzt werden können. Die Mikrodosierung mit dem bekannten Tropfengenerator ermöglicht diese reproduzierbar genaue Plazierung der Tropfen, wozu lediglich eine hochpräzise, kommerziell erhältliche X-Y-Verschiebung entlang der Tropfengeneratormündung positioniert zu werden braucht, die mit Hilfe eines Computer-gesteuerten Antriebs je nach gewünschter Gestaltung der Punktmatrix verschoben wird. Dabei ist nicht nur die Lage der einzelnen Tropfen auf der Reaktionszone maßgeblich, sondern es kann auch die Tropfenzahl festgelegt werden, die auf jeden einzelnen Matrixpunkt aufgebracht werden soll.

Die Gestaltung der Punktmatrix ermöglicht es dem Anwender auch, einen alphanumerischen Schriftzug herzustellen, der sich nach erfolgter Farbreaktion deutlich sichtbar von dem Untergrund der Reagenzträgerfolie abhebt. Dieser Schriftzug ist entweder als Wort ("MAK-Wert überschritten") oder als Zahl ("40 ppm"), oder als Kombination von Wort und Zahl erkennbar.

Mehrere hintereinander liegende Teilbereiche sind zweckmäßigerweise dann vorzusehen, wenn für den nachzuweisenden Schadstoff keine direkt anzeigenden Farbreagenzien zur Verfügung stehen, oder auf einfache Weise nicht langzeitstabil herstellbar sind. Für solche Fälle ist der Indikatorschicht eine Umwandlungsschicht vorzuschalten, die solche Reagenzien enthält, die den nachzuweisenden Schadstoff auf chemischem Wege in Komponenten zerlegt, von denen mindestens eine mit der nachfolgenden Indikatorschicht eine Farbreaktion eingeht. Zur Auswahl geeigneter Vorschichten (Umwandlungsbereiche) und Indikatorschichten können für die in Betracht zu ziehenden Schadstoffe die aus der Prüfröhrchentechnik bekannten Reagenzien verwendet werden.

Die Teilbereiche können auch übereinander angeordnet sein, indem genau auf den Punkten einer ersten Punktmatrix ein oder mehrere Tropfen aus dem Tropfenindikator dosiert werden, die eine zweite oder gegebenenfalls dritte und eine weitere, die erste Punktmatrix überdeckende Punktmatrix bilden. Eine derartige Anordnung ist z.B. für solche Fälle vorzusehen, bei denen der Farbindikator seine Wirkung erst bei ausreichender Befeuchtung zeigt. Somit wäre die zweite Punktmatrix eine Feuchtigkeit abgebende Schicht. Die Feuchtigkeit kann dazu beispielsweise der Nachweisprobe entnommen werden (Luftfeuchte) oder sie liegt bei einer wäßrigen Probe (Wasseranalytik) sowieso vor. Andererseits kann die Feuchtigkeit in dem porösen imprägnierten Träger durch Präparation des Silicagel in ausreichendem Maße von vornherein enthalten sein (Feuchtigkeitsspeicher). Ein weiterer Anwendungsfall sieht eine Trocknung des Prüfgases vor, ehe der nachzuweisende Schadstoff mit den Reagenzien reagiert. Auf diese Weise dient die zusätzliche Punktmatrix als Trockenschicht. Ein anderer Anwendungsfall betrifft den Nachweis von NOₓ. Die erste Punktmatrix enthält dann einen Farbindikator für NO₂, die deckungsgleich darüber befindlche, dem NOₓ ausgesetzte zweite Punktmatrix besitzt ein Oxidationsmittel zur Umwandlung von NOₓ zu NO₂. Ein solches Oxidationsmittel sind beispielsweise die Chrom(VI)-Salze und die Permanganate.

Neben der Reagenzträgerfolie besitzt der Folienverbund noch die Kanalfolie, eine Schutzfolie und eine Grundfolie. Der so zusammengestellte Folienverbund wird zwischen ein Trägeroberteil und ein Trägerunterteil ortsfest aufgenommen, und bildet so einen chipförmigen Träger, der mit Hilfe einer optischen Abtastvorrichtung elektronisch ausgewertet werden kann, wie sie in der DE-C-39 02 402 beschrieben ist.

Eine zweckmäßige Ausbildung des Folienverbundes ist in einer kreisförmigen Ausführung zu sehen, der durch ein entsprechend geformtes Trägeroberteil und -unterteil abgedeckt ist, wobei der Kanalanschluss an der Kreisperipherie des Folienverbundes vorgesehen ist. Die Reaktionskanäle verlaufen dann zur Mitte hin, wo sich ein Anschluß für eine Saugpumpe befindet. Während des Absaugens verfärbt sich die Reaktionsschicht mehr oder weniger tief, je nach Vorhandensein des nachzuweisenden Schadstoffes, dessen Menge oder Konzentration anhand der Verfärbungstiefe mit Hilfe eines Farbvergleichs an einem Farbstandard abgeschätzt werden kann. Fehlt der zentrale Anschluß, kann derselbe Träger als Diffusionsplakette benutzt werden, bei welcher der nachzuweisende Schadstoff von der Peripherie zur Mitte hin diffundiert. Die Auswertung erfolgt dann ebenfalls wie oben angegeben. Der Diffusionszutritt kann auch zentral erfolgen, so daß der Schadstoff innerhalb der Plakette an der Oberfläche der Reaktionszone entlang zur Peripherie des kreisscheibenförmigen Folienverbundes diffundiert.

Vorteilhafterweise kommt eine Folie aus FEPc für solche Fälle zum Einsatz, in denen eine einfache Plakette dem nachzuweisenden Schadstoff unmittelbar ausgesetzt ist. Auf einem Träger als Unterlage ist eine FEPc-Folie aufgespannt oder aufgeklebt, deren zur Umgebung weisende Oberfläche mit einem oder mehreren, in unterschiedlichen Bereichen vorliegenden Farbindikator und weiteren, für den kolorimetrischen Nachweis erforderlichen Chemikalien belegt ist, und zu dem der nachzuweisende Schadstoff freien Zutritt hat. Je nach Menge des Schadstoffes und Expositionsdauer verfärbt sich der Indikator mehr oder weniger intensiv.

Als Indikator dienen die bekannten, bei Prüfröhrchen eingesetzten Substanzen, die wegen der überraschend guten Hafteigenschaften der FEPc-Folie ohne Schwierigkeiten aufgebracht werden können; dabei können auch die bei den Kanalzonen im Folienverbund erwähnten Muster und die in ihrer Empfindlichkeit abwechselnden Beschichtungen aufgetragen werden.

Ein Ausführungsbeispiel der Erfindung ist anhand der Zeichnung dargestellt und wird im folgenden beschrieben.

Es zeigen:
- Fig. 1: die Ansicht eines chipförmigen Trägers mit mehreren Reaktionszonen,
- Fig. 2: einen Schnitt durch den Träger längs einer kanalförmigen Reaktionszone,
- Fig. 3: die Grundfolie bzw. die Deckfolie,
- Fig. 4: die Reagenzträgerfolie,
- Fig. 5: die Kanalfolie,
- Fig. 6: die Einzelansicht einer Reaktionszone in Form einer Punktmatrix,
- Fig. 7: die Darstellung einer Punktmatrix in zwei hintereinanderliegenden Teilbereichen,
- Fig. 8: die Darstellung einer Punktmatrix in zwei nebeneinanderliegenden Teilbereichen,
- Fig. 9: die Darstellung einer Punktmatrix in zwei ineinander verwobenen Teilbereichen,
- Fig. 10: die Darstellung zweier übereinanderliegender Teilbereiche einer Punktmatrix,
- Fig. 11: die Darstellung einer Dosimeterplakette,
- Fig. 12: die Dosiervorrichtung im Blockschema,
- Fig. 13: die Draufsicht auf eine Prüfplakette.

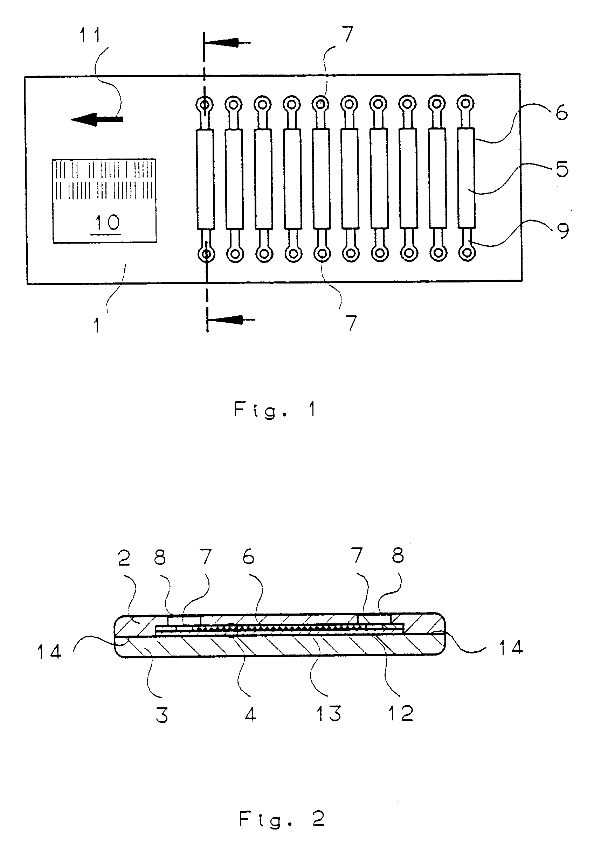

In Fig. 1 ist ein chipförmiger Träger (1) dargestellt, der aus einem Trägeroberteil (2) und einem Trägerunterteil (3) (Figur 2) zusammengefügt ist, wobei zwischen den Teilen (2, 3) ein Folienverbund (4) eingespannt ist. Das aus durchsichtigem Kunststoffmaterial bestehende Oberteil (2) läßt den Blick frei auf zehn parallel verlaufende Reaktionszonen (5), welche als Bodenfläche für einen Reaktionskanal (6) ausgebildet sind. Endseitig zu den Kanälen (6) sind Zutrittsöffnungen (7) vorgesehen, durch die das nachzuweisende Gasgemisch entweder mit Hilfe einer nicht dargestellten Pumpe hindurchgesaugt oder bei einseitiger Öffnung per Diffusion zu der Reaktionszone (5) längs des Kanals (6) migrieren kann. Die Zutrittsöffnungen (7) sind mit einer Versiegelung (8) verschlossen, die für die Durchführung einer durchgestoßen werden. Die Zutrittsöffnungen (7) sind mit den Kanälen (6) über einen Kanalanschluß (9) verbunden. Auf der Oberfläche des Trägeroberteils (2) ist ein Datenfeld (10) aufgedruckt, welches technische Informationen und Handhabungshinweise für den Gebrauch des kolorimetrischen Nachweisgerätes beinhalten. Diese Informationen sind entweder vom Anwender lesbar oder mit Hilfe eines Barcodes durch eine nicht dargestellte optische Auswerteeinheit erfaßbar. Eine derartige Auswerteeinheit ist in der DE-39 02 402 beschrieben. Ein Richtungspfeil (11) gibt an, welche Seite des Trägers (1) zuerst in das Auswertegerät einzuschieben ist. Während des Einschiebens wird das Datenfeld ausgelesen und die darin enthaltene Information an die Auswerteeinheit weitergegeben. Der Träger (1) wird soweit in die Auswerteeinheit vorgeschoben, bis der erste nicht benutzte Reaktionskanal (6) über die optische Auswerteeinheit gelangt. Diese enthält eine Anordnung von Strahlern und Empfängern, die mit einer bestimmten Wellenlänge entlang des Verlaufs der Reaktionszone (5) die Verfärbung abtastet.

Gleichzeitig wird nach Durchstoßen der Versiegelung (8) eine Pumpe angeschlossen, die das zu untersuchende Meßgas durch den Kanal (6) hindurchsaugt. Je nach Gehalt der nachzuweisenden Gaskomponente in der Meßprobe verfärbt sich die Reaktionszone (5) mehr oder weniger weit. Dies wird durch die Auswerteeinheit erfaßt und zu einem Meßwert verarbeitet. Nach erfolgter Auswertung des ersten Kanals (6) erfolgt ein automatischer Transport des Trägers (1) zum benachbarten zweiten Kanal (6), dessen Auswertung in gleicher Weise wie beschrieben erfolgt. Auf diese Art können bei Bedarf bis zu zehn unterschiedliche Gase untersucht und gemessen werden.

Fig. 2 zeigt den Schnitt längs eines Kanals (6) aus dem Träger (1) nach Fig. 1, wobei der Folienverbund (4) eine Reagenzträgerfolie (12) mit einer Punktmatrix (13) enthält. Die Punktmatrix (13) besteht aus einer definierten Anordnung von Tropfenflecken auf der Folie (12), welche in dem Kanal (6) dem zu untersuchenden Gas ausgesetzt sind. Das Trägeroberteil (2) besitzt die über den Zutrittsöffnungen (7) befindliche Versiegelung (8), welche zum Anschluß beispielsweise einer nicht dargestellten Gasförderpumpe durchstochen wird. Über die Zutrittsöffnungen (7) hat das nachzuweisende Gas Zutritt zu dem Kanal (6) und somit zu der Punktmatrix (13) mit dem aufgebrachten Indikator. Das Trägeroberteil (2) ist mit dem Trägerunterteil (3) über eine Klebenaht (14) ringsum verlaufend verbunden, wodurch der Folienverbund (4) zwischen beiden Teilen (2, 3) eingeklemmt ist.

Statt in Form einer Punktmatrix kann der Indikator auch auf Silicagel-Kugeln imprägniert vorliegen, welche auf der Reagenzträgerfolie (12) entlang der Reaktionszone (18) aufgetragen sind. Die Kugeln (13) nehmen jetzt den Platz der Tropfen ein. Die übrigen Teile des in Fig. 2 dargestellten Trägers bleiben dabei unverändert und können somit mit den gleichen Bezugsziffern gekennzeichnet bleiben. Fig. 2 zeigt daher ein Beispiel sowohl für eine Punktmatrix- als auch für eine Silicagel-Beschichtung auf der Reaktionszone (18).

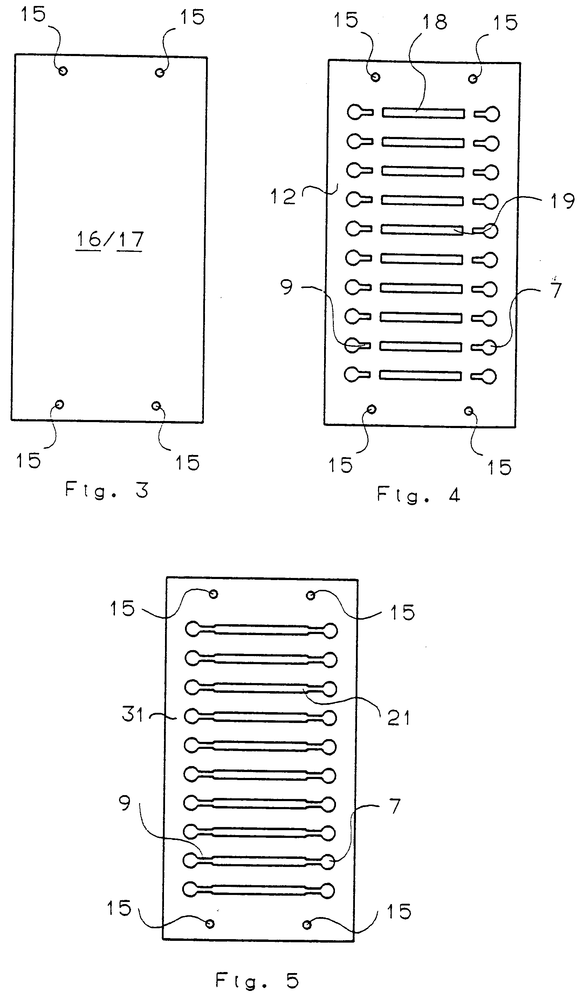

Die in Fig. 3 gezeigte Grundfolie besteht lediglich aus einer rechteckigen, einfachen FEP-Folie (ohne Vorbehandlung mittels Coronaentladung) mit vier Zentrier- bzw. Befestigungslöchern (15) in ihrem Eckbereich. Dieselbe Grundfolie (16) kann auch als Deckfolie (17) eingesetzt werden.

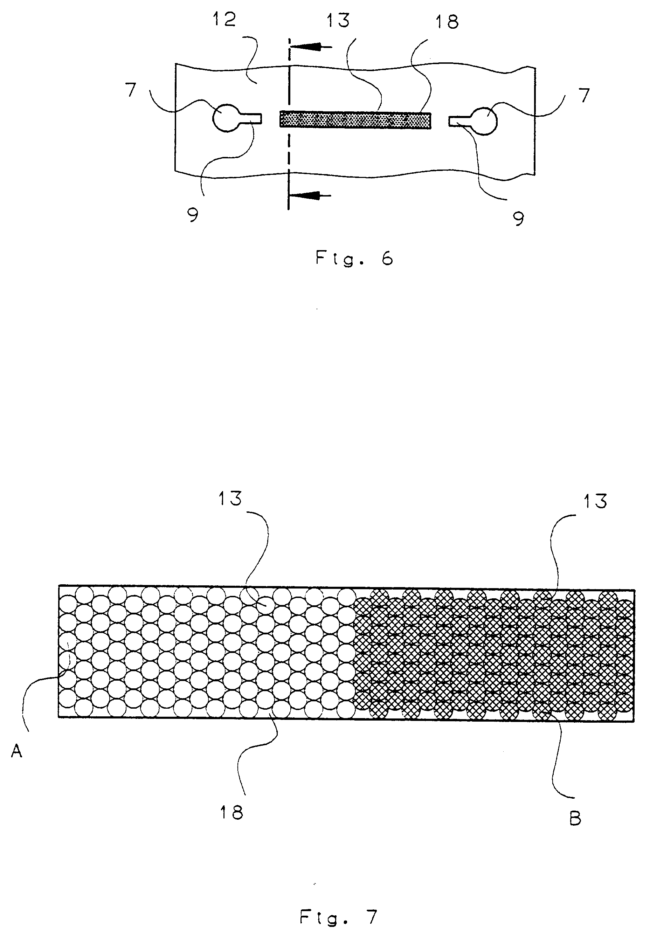

In Fig. 4 ist die Reagenzträgerfolie (12) aus FEP, Typ C (FEPc), dargestellt, welche einzelne, parallel zueinander verlaufende Reaktionszonen (18) aufweist, die mit den für den kolorimetrischen Nachweis erforderlichen Reagenzien beschichtet sind. Die Reaktionszonen (18) können aus einer aufgetragenen Beschichtung (19) bestehen, die aus einer Suspension mit allen, für den Nachweis des Schadstoffes erforderlichen Reagenzien (Eintopfpräparation) gewonnen wurde.

Die Kanalfolie (31) nach Fig. 5 weist in Übereinstimmung mit dem Verlauf der Reaktionszonen (18) Durchbrechungen auf, die als Kanal (21) für die zu untersuchende Gaskomponente dienen. Zu jedem der Kanäle (21) ist eine Verbindung mit der Zutrittsöffnung (7) über den Kanalanschluß (9) hergestellt. Die Durchbrechung des Kanals (21) bildet später beim Auflegen der Kanalfolie (31) auf die Reagenzträgerfolie (12) die Kanalwände, auf die die Deckfolie (17) gelegt wird, und die somit die Kanäle (21) sowohl voneinander als auch von der Umgebung abtrennt.

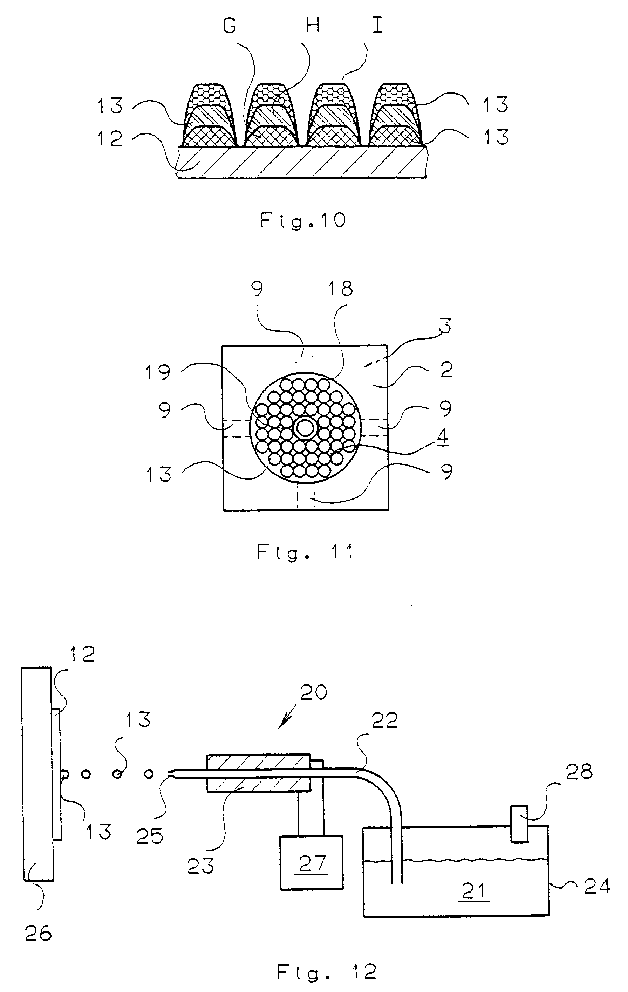

Ein Beispiel einer Punktmatrix (13) auf der Reaktionszone (18) ist in Fig. 6 dargestellt, wobei nur eine einzige Reaktionszone (18) gezeigt ist. Eine Vielzahl von kreisförmig auf der Reagenzträgerfolie (12) ausgebreiteten Tropfen (13) bilden die Punktmatrix, welche auch den Verlauf der Reaktionszone (18) vorgibt. Jeder einzelne Tropfen (13) ist mit Hilfe eines Tropfengenerators (20) (Fig. 12) auf die Reagenzträgerfolie (12) aufgebracht, und enthält die für die Farbreaktion erforderlichen Reagenzien.

In Fig. 7 ist eine Punktmatrix (13) dargestellt, die in zwei Teilbereiche (A, B) unterteilt ist, von denen der eine (A) strömungsmäßig vor dem anderen (B) auf der Reaktionszone (18) liegt. Der vordere Teilbereich (A) besteht aus Tropfen (13), die ein Chemikal zur Umwandlung eines nachzuweisenden Stoffes in solche Komponenten enthalten, die von den nachfolgenden Tropfen (13) des Teilbereichs (B) in einer Farbreaktion nachweisbar sind. Teilbereich (A) ist daher ein Umwandlungsbereich, Teilbereich (B) ist der Indikatorbereich.

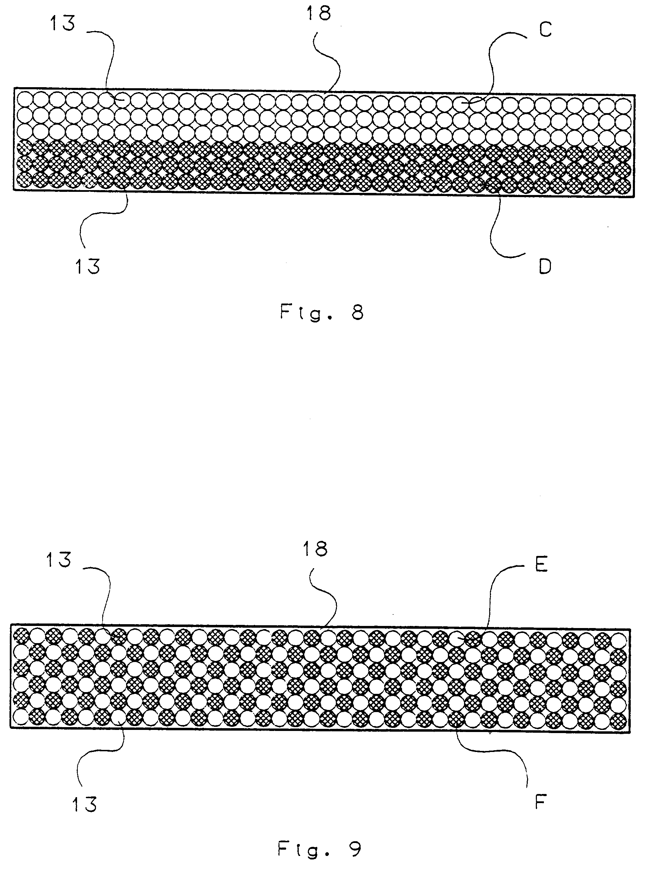

In Fig. 8 sind zwei parallel zueinander verlaufende Teilbereiche (C) und (D) als eine Punktmatrix (13) gezeigt, wobei jeder Teilbereich (C, D) Tropfen (13) enthält, die jeweils einen Indikator für den Nachweis eines unterschiedlichen Schadstoffes enthalten.

Die in Fig. 9 dargestellten Teilbereiche (E, F) sind als ineinander verwobene Punktmatrix (13) anzusehen: In die Lücken zwischen den Punkten (13) des Teilbereichs (E) sind die Punkte (13) des Teilbereichs (F) eingefügt.

Diese verschiedenen Ausbildungsformen einer Punktmatrix (13) sind lediglich eine Auswahl von vielen weiteren Varianten, bei denen z.B. die Teilbereiche streifenförmig nebeneinander oder hintereinander auf der Reagenzträgerfolie (12) angeordnet sind, oder Punkte (13) mit unterschiedlichen Reagenzien wechseln innerhalb einer Reihe ab und bilden so punktweise alternierende Teilbereiche. Somit ist deutlich, daß der Begriff "Teilbereich" in einer weiten Interpretationsweise gefaßt werden kann.

Ein Beispiel für die Anordnung von zwei aufeinanderliegenden Teilbereichen (G, H) ist in der Schnittdarstellung gemäß Fig. 10 gezeigt. Auf der Reagenzträgerfolie (FEPc) (12) ist eine erste Beschichtung aus Tropfen (13) mit einem Indikator für NO₂ aufgetragen. Dieser wird von Tropfen (13) aus reinem Silicagel überdeckt, welche als Schutzabdeckung (Zwischenschicht) wirken für den darüber befindlichen Teilbereich (H), gebildet aus Tropfen (13), die ein Oxidationsmittel für die Umwandlung von dem nachzuweisenden NOₓ in NO₂ enthalten. Um eine unerwünschte Veränderung des Tropfens (13) im Teilbereich (G) durch das Oxidationsmittel in bezug auf die Stabilität des in ihm befindlichen Indikators für NO₂ zu vermeiden, ist die Zwischenschicht aus Silicagel geeignet, die Oxidationswirkung auf die Umwandlung von NOₓ in NO₂ zu begrenzen.

Zusätzlich ist über den äußeren Umwandlungsbereich (H) ein weiterer Teilbereich (I) aufgebracht, der aus Tropfen (13) gebildet ist, deren Reagenzien Absorbereigenschaften haben, um mögliche, den Nachweis oder die Nachweisreaktion störende oder behindernde Komponenten aus dem zu untersuchenden Stoffgemisch (gasförmig oder flüssig) herauszufiltern und sie von der Beteiligung an der Farbreaktion auszuschließen.

Insgesamt befindet sich auf der Reagenzträgerfolie (12) eine dreilagige Schichtung von Teilbereichen (G, H, I), gebildet aus einer dreifachen Punktmatrix (13), wobei drei Tropfen unterschiedlicher Zusammensetzung deckungsgleich aufeinanderplaziert wurden.

Zur deutlicheren Unterscheidung der verschiedenen Zusammensetzung der Tropfen (13) einzelner Teilbereiche (A-I) wurden unterschiedliche Schraffierungen gewählt.

In Fig. 11 ist eine weitere Möglichkeit zur Ausführung einer Dosimeterplakette gezeigt. Der kreisförmige Folienverbund ist zwischen einem rechteckigen durchsichtigen Trägeroberteil und einem Unterteil eingespannt. Die Reagenzträgerfolie (12) ist ganzflächig mit einer Punktmatrix aus Tropfen (13) überdeckt. Die Reaktionszone (18) erstreckt sich somit ebenfalls über die gesamte Oberfläche der Reagenzträgerfolie (12). Von der Peripherie des Folienverbundes (4) gehen Kanalöffnungen (9) aus, durch die der nachzuweisende Schadstoff in die Reaktionszone (18) eindiffundieren kann. Die Kanalöffnungen (9) beschränken sich auf die Durchbrüche im Randbereich zwischen dem Oberteil (2) und dem unterhalb der Zeichenebene liegenden Unterteil (3). Ein Anschluß (19) ist im Zentrum des Trägeroberteils (2) vorgesehen, an den im Bedarfsfall eine Saugpumpe (nicht dargestellt) angeschlossen werden kann, um das Dosimeter als Konzentrations-Meßplakette zu benutzen. (Dazu wird eine definierte Menge an Probenluft durch die Plakette gesaugt. Die daraus resultierende Verfärbungstiefe auf der Reaktionszone (18) ist ein Maß für die in der Probenluft enthaltenen Konzentration an nachzuweisendem Schadstoff.) Beim Gebrauch der Plakette als Dosimeter ist der zentrale Anschluß (19) dichtgesetzt, oder von Anfang an fortgelassen.

Zur Verdeutlichung der Aufbringung einer Punktmatrix (13) auf die Reagenzträgerfolie (12) ist in Fig. 12 ein Tropfengenerator (20) dargestellt, der aus einem mit Flüssigkeit (21) gefüllten Kapillarrohr (22) besteht, welches mit einem piezokeramischen Element (23) teilweise umhüllt ist. Die Flüssigkeit (21) besteht aus einer Lösung aller für eine gewünschte Farbreaktion notwendigen Reagenzien und wird in einem Vorratsbehälter (24) aufbewahrt. Ähnlich wie beim bekannten Tintenstrahldrucker wird aus einer Düse (25) am Ende der Kapillare (22) ein kleines Flüssigkeitsvolumen (nl bis pl) als Tropfen (13) auf die Reagenzträgerfolie (12) gespritzt. Die Folie (12) ist auf einer X-Y-Verschiebung (26) aufgenommen, die durch einen nicht dargestellten Antrieb in eine Ebene unabhängig voneinander entlang zwei Richtungen bewegt werden kann.
Die X-Y-Verschiebung arbeitet synchron mit dem Tropfengenerator (20), so daß bei entsprechender Steuerung eine Punktmatrix (13) auf der Reagenzträgerfolie (12) erzeugt wird.

Die Tropfenerzeugung geschieht dadurch, daß beim Anlegen einer Spannung durch die Generatorsteuerung (27) an die Elektroden des piezokeramischen Elementes (23) dieses sich deformiert, wodurch in der inkompressiblen Flüssigkeit ein sehr schneller Druckanstieg erzeugt wird. Dieser pflanzt sich mit Schallgeschwindigkeit längs der Kapillare (22) bis zur Düse (25) fort. Eine feine Flüssigkeitssäule verläßt mit sehr hoher Beschleunigung die Düse (25) und formt sich umgehend zu einem Tropfen (13). Durch Kapillarkräfte wird das verlorene Flüssigkeitsvolumen aus dem Vorratsbehälter (24) nachgeliefert. Der Behälter (24) besitzt eine Belüftungs- und Nachfüllöffnung (28).

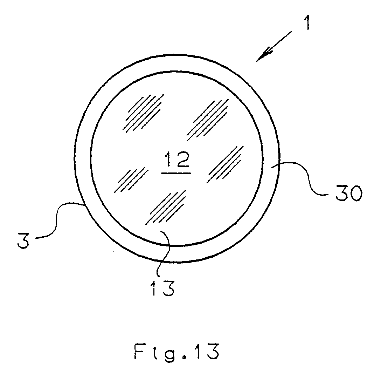

Eine besonders einfache Ausführungsform einer Prüfplakette ist in Fig. 13 dargestellt. Die Draufsicht zeigt einen Träger (1), bestehend lediglich aus einem Trägerunterteil (3) sowie einem Rand (30), auf den eine Folie (12) aus FEPc, mit einem Farbindikator als Reaktionszone (13) beschichtet, aufgeklebt ist. Die Reaktionszone (13) ist dem nachzuweisenden Schadstoff direkt ausgesetzt. Sobald dieser auf den Farbindikator trifft, geht er eine Farbreaktion mit ihm ein, wodurch sich der Indikator mehr oder weniger stark verfärbt.

## Patentansprüche

1. Träger für eine oder mehrere kanalförmig in diesem aufgebrachte Reaktionszonen zum kolorimetrischen Nachweis von gasförmigen Schadstoffen, die beim Durchdringen des Kanals eine Farbreaktion mit einem Farbindikator eingehen, der auf einer der Grundflächen der Reaktionszone als Auskleidung aufgebracht ist, dadurch gekennzeichnet, daß der Träger als ein sandwichartiger Folienverbund (4) ausgestaltet ist, der eine Reagenzträgerfolie (12) umfaßt, auf welcher die Reaktionszonen (18) flächig, und den Kanalverlauf vorgebend aufgetragen sind, und die mit einer Kanalfolie (31) abgedeckt ist, welche den Reaktionszonenverlauf folgend jede der Zonen (18) mit einem Strömungskanal (21) überdeckt, der einerseits durch Seitenwände (23) jede Reaktionszone von ihrer benachbarten bzw. von der Umgebung räumlich und strömungsmäßig abtrennt, und der andererseits mindestens einen Kanalanschluß (9) aufweist, durch den der nachzuweisende Schadstoff Zutritt zu der Reaktionszone (18) erhält, und daß die Reagenzträgerfolie (12) aus FEP (Perfluorethylenpropylen) besteht, die durch eine Coronaentladung oberflächenbehandelt ist (FEPc).

2. Träger nach Anspruch 1, dadurch gekennzeichnet, daß die Reaktionszone durch eine auf der Reagenzträgerfolie (12) aufgebrachte Haftschicht (18) ausgebildet ist, auf welcher mit dem Farbindikator imprägnierte Silikagelkugeln (13) als Reagenzträger aufgebracht sind.

3. Träger nach Anspruch 1, dadurch gekennzeichnet, daß die Reaktionszone in Form einer Punktmatrix (13) gebildet ist, die aus einzelnen, in vorgebbarem Raster mittels eines als Tropfengenerator (20) arbeitenden Dosierkopfes aus einem Reservoir (27), gefüllt mit einer Suspension aus für die Farbreaktion erforderlchen Reagenzien, geförderten und auf die FEPc-Folie (12) aufgebrachten Tropfen (13) besteht.

4. Träger nach Anspruch 3, daduch gekennzeichnet, daß die Suspension aus einer Beschichtungslösung besteht, die in einem Sol-Gel-Verfahren gewonnen wird.

5. Träger nach einem der Ansprüche 1 bis 4, dadurch gekennzeichnet, daß ein festes Trägeroberteil (2) und ein festes Trägerunterteil (3) vorgesehen sind, zwischen die der Folienverbund (4) ortsfest aufgenommen ist.

6. Träger nach einem der Ansprüche 3 bis 6, dadurch gekennzeichnt, daß die Reaktionszone (18) in mehrere, hintereinander oder parallel zueinander aufgebrachten Teilbereiche (A, B, C, D, E, F) unterteilt ist, die sich durch verschiedenartige Reaktionsteilnehmer unterscheiden.

7. Träger nach Anspruch 6, dadurch gekennzeichnet, daß dem den Farbindikator als Reaktionsteilnehmer enthaltenden Teilbereich (B) ein den nachzuweisenden Stoff in ein die Farbreaktion ermöglichendes Reaktionsprodukt umwandelndes Reagenz enthaltender Umwandlungsbereich (A) vorgeschaltet ist.

8. Träger nach Anspruch 6, dadurch gekennzeichnet, daß parallel zu einem den Farbindikator für eine erste Farbreaktion enthaltenden Teilbereich (C) ein zweiter Teilbereich (D) angeordnet ist, welcher einen von dem ersten Farbindikator unterschiedlichen zweiten Farbindikator für eine zweite Farbreaktion enthält.

9. Träger nach Anspruch 6, dadurch gekennzeichnet, daß einem ersten Teilbereich (G) zum Nachweis einer zu untersuchenden Gasprobe auf der Reagenzträgerfolie (12) als Punktmatrix (13) aufgetragen ist, und daß über den Punkten (13) des Teilbereichs (G) mindestens ein zweiter Teilbereich (I) aufgetragen ist, dessen Punkte (13) deckungsgleich auf die Punkte (13) des Teilbereichs (G) aufgebracht sind.

10. Träger nach einem der Ansprüche 1 bis 9, dadurch gekennzeichnet, daß der Folienverbund (4) kreisförmig ausgebildet ist, daß der Kanalanschluß (9) von der Kreisperipherie ausgehend zum Mittelpunkt hin weisend verläuft, und daß die gesamte Fläche der Reagenzträgerfolie (12) als Reaktionszone (18) ausgebildet ist.

11. Träger nach einem der Ansprüche 1 bis 9, dadurch gekennzeichnet, daß der Folienverbund (4) kreisförmig ausgebildet ist, daß der Kanalanschluß (19) von dem Mittelpunkt des Folienverbundes (4) ausgehend zur Peripherie hin weisend verläuft, und daß die gesamte Fläche der Reagenzträgerfolie (12) als Reaktionszone (18) ausgebildet ist.

12. Träger für eine Reaktionszone zum kontinuierlichen Nachweis von gasförmigen Schadstoffen, die mit einem auf der Reaktionszone aufgebrachten Farbindikator eine Farbreaktion eingehen, dadurch gekennzeichnet, daß auf dem Träger (1) eine Folie (12) aus FEP (Perfluorethylenpropylen) aufgespannt ist, die durch eine Coronaentladung oberflächenbehandelt ist (FEPc).

13. Träger nach Anspruch 12, dadurch gekennzeichnet, daß die Reaktionszone in Form einer Beschichtung (13) auf der Folie (12) aufgebracht und unmittelbar dem Schadstoff ausgesetzt ist.
